# EUROPÄISCHE PATENTSCHRIFT

(11) **EP 0 860 312 B1**
(45) Veröffentlichungstag und Bekanntmachung des Hinweises auf die Patenterteilung: **02.05.2002**
(21) Anmeldenummer: 98101508.4
(22) Anmeldetag: 29.01.1998
(51) Int. Cl.: B60J 7/20

(54) **Variables Aufnahmefach, insbesondere für ein Faltverdeck**
Variable storing case, especially for foldable top
Coffre de stockage variable, en particulier pour capote pliante

(30) Priorität: 21.02.1997 DE 19706830
(43) Veröffentlichungstag der Anmeldung: 26.08.1998
(73) Patentinhaber: Bayerische Motoren Werke Aktiengesellschaft, 80788 München (DE)
(72) Erfinder: Gode, Fedor, 85080 Gaimersheim (DE)

(56) Entgegenhaltungen:
- DE-A- 4 445 920
- DE-C- 19 541 168
- DE-U- 29 608 251

## Beschreibung

Die Erfindung betrifft ein variables Aufnahmefach, insbesondere für ein Faltverdeck, mit den im Oberbegriff des Patentanspruches 1 angegebenen Merkmalen.

Ein derartiges variables Aufnahmefach ist in der DE-OS 15 05 474 bei einem Kraftfahrzeug mit einem Klappverdeck vorgesehen, das über eine höhenverstellbare Trennwand von dem dahinter und darunter befindlichen Gepäckraum abgetrennt ist. Beim Einbringen des Klappverdecks in das Aufnahmefach senkt sich die Trennwand ab. Bei geschlossenem Klappdach ist die Trennwand nach oben verstellt, wodurch der Gepäckraum entsprechend vergrößert ist. Wird das Faltverdeck beispielsweise nach einem Regen in das Aufnahmefach eingebracht, können eventuell an dem Klappdach haftende Wasserteilchen in den benachbarten Gepäckraum gelangen und an darin abgelegten Gegenständen einen Schaden bewirken.

Der Erfindung liegt die Aufgabe zugrunde, ein variables Aufnahmefach nach dem Oberbegriff des Patentanspruches 1 anzugeben, bei dem ein Übertritt von Wasserteilchen von einem Ablageraum in den anderen Ablageraum verhindert ist.

Diese Aufgabe ist durch die im Patentanspruch 1 angegebenen Merkmale gelöst. Das im Randbereich der Durchtrittsöffnung befestigte Sackteil kann so imprägniert oder ausgebildet sein, daß ein Wasserdurchtritt durch das Sackteil hindurch zuverlässig verhindert ist. Ist das Sackteil an seinem offenen Rand wasserdicht mit dem Randbereich der Durchtrittsöffnung verbunden, so kann auch über die Befestigungsstelle des Sackteiles kein Wasser durch die Durchtrittsöffnung hindurchtreten. Das Sackteil ist derart formveränderlich auszubilden, daß die in der Durchtrittsöffnung angeordnete Verstellwand eine Verstellbewegung beispielsweise von einer Hochlage in eine Tieflage und umgekehrt ausführen kann. Das Sackteil kann aus einem Stoff, Kunststoff, Leder oder einem anderen formveränderlichen Materialien gebildet sein.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen
- Figur 1: eine Seitenansicht der verstellbaren Trennwand,
- Figur 2: eine perspektivische Ansicht auf die Durchtrittsöffnung,
- Figur 3: eine Schrägansicht von dem Sackteil bei hochgestellter Trennwand und
- Figur 4: eine Schrägansicht von dem Sackteil bei tiefgestellter Trennwand.

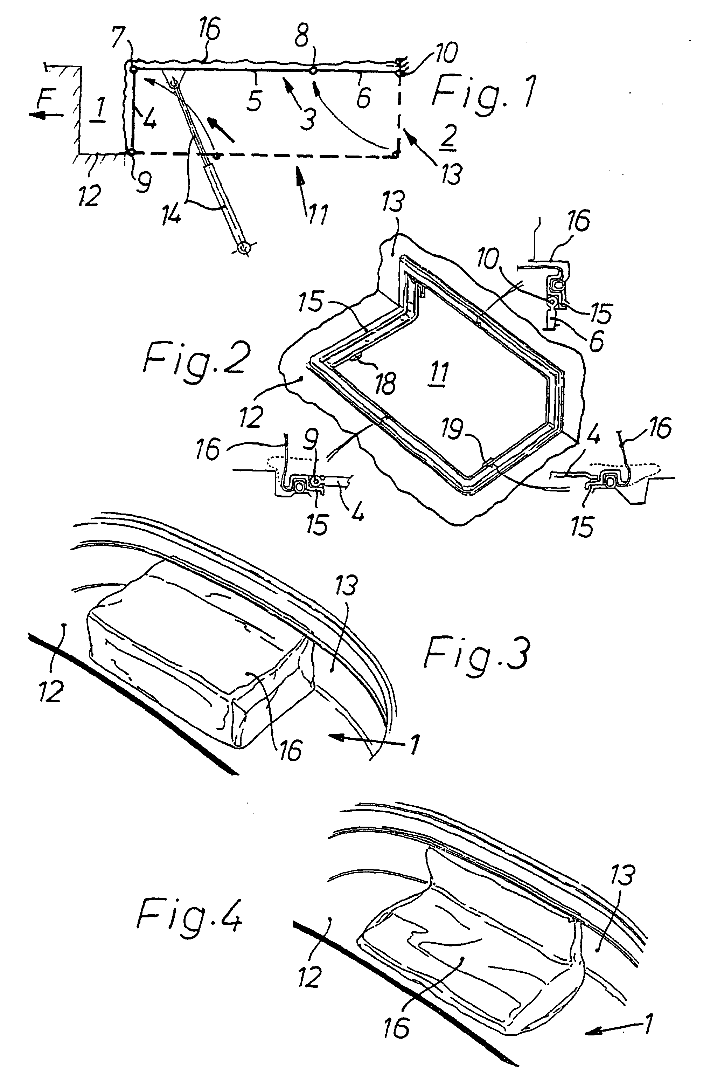

Das in Figur 1 dargestellte variable Aufnahmefach ist im hinteren Bereich eines mit einem Faltverdeck versehenen Fahrzeugs vorgesehen, dessen Fahrtrichtung durch den Pfeil F angegeben ist. Das Aufnahmefach weist zwei Ablageräume 1, 2 auf, die von einer verstellbaren Trennwand 3 voneinander getrennt sind. Das Faltverdeck kann geöffnet und nach hinten in den Ablageraum 1 eingebracht werden, wenn die variable Trennwand 3 tiefgestellt ist. Die variable Trennwand 3 weist drei Plattenteile 4, 5, 6 auf, die um Querachsen 7, 8 gelenkig miteinander verbunden sind. Die äußeren Plattenteile 4, 6 sind jeweils um eine zugeordnete Fahrzeugquerachse 9, 10 an dem Randbereich einer Durchtrittsöffnung 11 befestigt. Die Durchtrittsöffnung 11 ist in einem ortsfesten Wandelement ausgebildet, das abgewinkelt ist und einen horizontalen und einen vertikalen Wandbereich 12, 13 aufweist. Die Durchtrittsöffnung 11 verläuft von dem horizontalen Wandbereich 12 bis in den vertikalen Wandbereich 13 und erstreckt sich etwa zwischen den Fahrzeugquerachsen 9 und 10. Ist das Faltverdeck geschlossen, kann die variable Trennwand 3 in die durch ausgezogene Linien dargestellte Hochlage verstellt werden, in der das vordere Plattenteil 4 etwa vertikal angeordnet ist und das mittlere Plattenteil 5 mit dem hinteren Plattenteil 6 annähernd horizontal verläuft. In dieser Hochlage können in den zur Aufnahme von Gepäckstücken vorgesehenen Ablageraum 2 Gegenstände bis unter die Plattenteile 5, 6 abgelegt werden, wodurch sich der Ablageraum 2 besser nutzen läßt. Soll das Fahrzeugdach geöffnet und in den Ablageraum 1 eingebracht werden, so sind vorher die Plattenteile 4, 5, 6 in die durch unterbrochene Linien dargestellte Tieflage zu verstellen, in der das vordere und mittlere Plattenteil 4, 5 etwa horizontal und das hintere Plattenteil 6 etwa vertikal angeordnet sind. Der Ablageraum 1 ist in dieser Tieflage vergrößert, so daß er das gesamte Faltverdeck oder zumindest einen größeren Teil davon aufnehmen kann. Das Verstellen der Trennwände kann motorisch oder mechanisch erfolgen und beispielsweise von einem Federzylinder 14 unterstützt sein, der bei dem Ausführungsbeispiel an dem mittleren Plattenteil 5 gelenkig angreift.

Gemäß Figur 2 ist im Randbereich der Durchtrittsöffnung 11 ein Rahmen 15 angeordnet, an dem der Rand eines Sackteiles 16 wasserdicht zu befestigen ist, der aus einem wasserdichten Material besteht oder wasserdicht imprägniert ist. Das Sackteil 16 ist in dieser Figur lediglich in den beigefügten Schnitten durch den Rahmen 15 erkennbar. In diesen Schnitten sind die Fahrzeugquerachsen 9,10 erkennbar, die an dem Rahmen 15 ausgebildet sind und Schwenkachsen für die äußeren Plattenteile 4,6 bilden. An dem Rahmenteil 15 sind Anschläge 18,19 ausgebildet, an denen in der Tieflage das vordere Plattenteil 4 anliegt. Das Sackteil 16 trennt die beiden Ablageräume 1, 2 wasserdicht voneinander, unabhängig davon ob sich die Plattenteil 4, 5, 6 in ihrer Hochlage bzw. Tieflage oder in einer beliebigenZwischenstellung befinden.

In Figur 3 sind die Plattenteile in ihre Hochlage verstellt und von dem Sackteil 16 überdeckt, das sich selbsttätig an die Kontur der Plattenteile anpaßt hat.

Sind die Plattenteile gemäß Figur 4 in ihre Tieflage verstellt, ist das Sackteil 16 nach unten eingefallen und liegt von oben an dem vorderen und mittleren Plattenteil sowie von vom an dem hinteren Plattenteil an. In dieser Lage kann das Faltverdeck in den Ablageraum 1 eingebracht werden, wobei eventuell an dem Faltverdeck haftendes Wasser nicht in den dahinter und teilweise darunter befindlichen Ablageraum 2 eindringen kann. Eventuell in den Ablageraum1 eingedrungenes Wasser wird über eine nicht dargestellte Wasserableiteinrichtung abgeführt.

Das Sackteil kann aus unterschiedlichen Materialien, beispielsweise einem wasserundurchlässigen oder wasserdicht imprägnierten Stoff, Kunststoff, Leder oder einem anderen wasserundurchlässigen und formveränderlichen Material gebildet sein.

## Patentansprüche

1. Variables Aufnahmefach, insbesondere für ein Faltverdeck, mit zwei über eine verstellbare Trennwand (3) volumenveränderlichen Ablageräumen (1,2), **dadurch gekennzeichnet, daß** die Trennwand (3) in einer Durchtrittsöffnung (11) in einem ortsfesten Wandelement (12, 13) verstellbar angeordnet ist und im Randbereich der Durchtrittsöffnung (11) ein formveränderliches Sackteil (16) befestigt ist, das sich an die jeweilige Lage der verstellbaren Trennwand (3) anpassen kann.

2. Variables Aufnahmefach nach Anspruch 1, **dadurch gekennzeichnet, daß** im Randbereich der Durchtrittsöffnung (11) ein Rahmen (15) angeordnet ist, an dem der Rand des Sackteiles (16) befestigt ist.

3. Variables Aufnahmefach nach Anspruch 1 oder 2, **dadurch gekennzeichnet, daß** das ortsfeste Wandelement abgewinkelt ausgebildet ist und einen horizontalen und einen vertikalen Wandbereich (12, 13) aufweist, und sich die Durchtrittsöffnung (11) von dem horizontalen Wandbereich (12) bis in den vertikalen Wandbereich (13) erstreckt.

4. Variables Aufnahmefach nach einem der Ansprüche 1 bis 3, **dadurch gekennzeichnet, daß** das Sackteil (16) wasserundurchlässig ausgebildet oder wasserdicht imprägniert ist und die beiden Ablageräume (1, 2) wasserdicht voneinander trennt.

5. Variables Aufnahmefach einem der Ansprüche 1 bis 4, **dadurch gekennzeichnet, daß** die verstellbare Trennwand drei schwenkbar miteinander verbundene Plattenteile (4, 5, 6) aufweist, von denen die äußeren Plattenteile (4, 6) derart schwenkbar am Randbereich der Durchtrittsöffnung (11) befestigt sind, daß in einer Hochlage ein äußeres und das mittlere Plattenteil (5, 6) etwa horizontal und das andere äußere Plattenteil (4) vertikal angeordnet sind und in einer Tieflage das andere äußere Plattenteil (4) und das mittlere Plattenteil (5) etwa horizontal und ein äußeres Plattenteil (6) vertikal angeordnet sind.

## Claims

1. A variable receiving compartment, especially for a folding roof, comprising two storage chambers (1, 2), the volume of which can be varied by an adjustable partition (3), **characterised in that** the partition (3) is adjustably disposed in a passage opening (11) in a stationary wall element (12, 13) and a variable-shape bag part (16) is fastened in the edge region of the passage opening (11) and can adapt to the position of the adjustable partition (3).

2. A variable receiving compartment according to claim 1, **characterised in that** a frame (15) is disposed in the edge region of the passage opening (11), the edge of the bag part (16) being fastened to the frame.

3. A variable receiving compartment according to claim 1 or claim 2, **characterised in that** the stationary wall element is bent at an angle and has a horizontal and a vertical wall region (12, 13) and the passage opening (11) extends from the horizontal wall region (12) to the vertical wall region (13).

4. A variable receiving compartment according to any of claims 1 to 3, **characterised in that** the bag part (16) is impregnated so as to be impermeable to water or watertight and separates the two storage spaces (1, 2) in watertight manner.

5. A variable receiving compartment according to any of claims 1 to 4, **characterised in that** the adjustable partition has three pivotably connected plate parts (4, 5, 6), the outer plate parts (4, 6) being pivotably fastened to the edge region of the passage opening (11) so that in a raised position one outer part (6) and the middle part (5) are approximately horizontal and the other outer part (4) is vertical whereas in a lowered position the other outer plate part (4) and the middle part (5) are approximately horizontal and an outer plate part (6) is vertical.

## Revendications

1. Coffre de stockage variable, en particulier pour une capote pliante comprenant deux volumes de dépôt (1, 2) isolés l'un de l'autre par l'intermédiaire d'une paroi séparatrice mobile (3),
**caractérisé en ce que**
la paroi séparatrice (3) est montée en pouvant se déplacer dans une ouverture de passage (11) pratiquée dans un élément fixe de paroi (12, 13) et, à la zone marginale de l'ouverture (11) est fixée une partie de sac (16) de forme variable pouvant s'adapter chaque fois à la position de la paroi séparatrice mobile (3).

2. Coffre de stockage variable selon la revendication 1,
**caractérisé en ce que**
dans la zone marginale de l'ouverture de passage (11) est monté un cadre (15) sur le bord duquel est fixée la partie de sac (16).

3. Coffre de stockage variable selon l'une quelconque des revendications 1 ou 2,
**caractérisé en ce que**
l'élément fixe de paroi est coudé et présente une zone de paroi horizontale et une zone de paroi verticale (12, 13), l'ouverture de passage (11) allant de la zone horizontale de paroi (12) à la zone verticale de paroi (13).

4. Coffre de stockage variable selon l'une quelconque des revendications 1 à 3,
**caractérisé en ce que**
la partie de sac (16) est imperméable à l'eau ou rendue imperméable par imprégnation, et les deux volumes de dépôt (1, 2) sont séparés l'un de l'autre avec étanchéité à l'eau.

5. Coffre de stockage variable selon l'une quelconque des revendications 1 à 4,
**caractérisé en ce que**
la paroi séparatrice mobile comporte trois parties de plateau (4, 5, 6) articulées entre elles, dont les parties de plateau externes (4, 6) sont fixées basculantes sur la zone marginale de l'ouverture de passage (11) de manière qu'en position haute une partie externe de plateau et la partie médiane (5, 6) sont à peu près horizontales, et l'autre partie externe de plateau (4) est verticale, tandis qu'en position basse, l'autre partie externe de plateau (4) et la partie moyenne (5) sont à peu près horizontales et la partie de plateau externe (6) est verticale.
